# EUROPÄISCHE PATENTANMELDUNG

(11) **EP 1 198 143 A2**
(43) Veröffentlichungstag der Anmeldung: **17.04.2002**
(21) Anmeldenummer: 01440322.4
(22) Anmeldetag: 01.10.2001
(51) Int. Cl.: H04Q 3/00

(54) **Netzwerk-Management System**

(30) Priorität: 05.10.2000 DE 10049609
(71) Anmelder: ALCATEL, 75008 Paris (FR)
(72) Erfinder: Takats, Martin, 12619 Berlin (DE); Hain, Elke, 16547 Birkenwerder (DE)
(74) Vertreter: Zinsinger, Norbert

(57) **Zusammenfassung**

Die vorliegende Erfindung betrifft ein Verfahren für ein Netzwerk-Management-System zur Übertragung von Ereignismeldungen sowie ein Diskriminator-Objekt (DO1, DO2), ein Management-Objekt (MO1, MO2) und ein verwaltetes Objekt (VO1, VO2, VO3) hierfür. Bei dem Verfahren versendet das verwaltete Objekt Ereignisinformationen an das Management-Objekt, welches anhand von Filterkriterien (K11, K12, K21, K22, K23; K2A) ermittelt, welche der Ereignisinformationen an das Management-Objekt zu sendende Ereignisse betreffen. Dafür wird vorgeschlagen, dass das Management-Objekt oder ein zeitgesteuertes Steuerprogramm eine erste Anforderungsnachricht zur Abfrage mindestens eines Ereigniszustandes des verwalteten Objektes an das Diskriminator-Objekt sendet, worauf dieses eine zweite Anforderungsnachricht an das verwaltete Objekt zur Abfrage von dessen Ereigniszustand sendet. Das verwaltete Objekt meldet seinen Ereigniszustand an das Diskriminator-Objekt, welches den gemeldeten Ereigniszustand anhand der Filterkriterien überprüft und an das Management-Objekt berichtet, wenn der mindestens eine Ereigniszustand ein für das Management-Objekt relevantes Ereignis betrifft.

## Beschreibung

Die vorliegende Erfindung betrifft ein Verfahren für ein Netzwerk-Management-System zur Übertragung von Ereignisinformationen, ein Diskriminator-Objekt gemäß dem Oberbegriff des Anspruchs 11 hierfür, ein Management-Objekt gemäß dem Oberbegriff des Anspruchs 12 hierfür sowie ein verwaltetes Objekt dem Oberbegriff des Anspruchs 16 hierfür.

In einem Netzwerk-Management-System für ein Rechnernetzwerk mit einer sogenannten offenen Systemarchitektur, beispielsweise für ein Telekommunikationsnetz, senden die durch das Netzwerk-Management-System verwalteten Systeme, die sogenannten verwalteten Objekte (engl. managed objects), die beispielsweise eine Vermittlungsstelle, einen Router oder einen Netzwerk-Dienst repräsentieren, bei Eintreten eines Ereignisses spontan Ereignismeldungen an zumindest ein sie verwaltendes System, ein sogenanntes Management-Objekt. Die Ereignismeldungen betreffen beispielsweise eine Störung im verwalteten Objekt, die Überschreitung eines Grenzwertes oder die Änderung des Konfigurationszustandes des verwalteten Objektes. Das Management-Objekt, das beispielsweise ein Rechner einer Netzwerk-Management-Zentrale oder ein von einem Rechner ausgeführter Netzwerk-Management-Prozess ist, zeigt die spontanen Ereignismeldungen z.B. an einer Bedienoberfläche an und sendet beispielsweise zur Behebung eines Störungszustandes Steuerbefehle an das zu steuernde System, also das Rechnernetzwerk und/oder das verwaltete Objekt.

Je nach Zuständigkeit oder Ausgestaltung eines Management-Objekts sind jedoch nicht alle spontanen Ereignismeldungen, die ein verwaltetes Objekt potentiell versenden kann, für das jeweilige Management-Objekt relevant. Daher werden die Ereignismeldungen in einer aus der ITU-Recommendation X.734 (ITU = International Telecommunication Union) bekannten Lösung durch sogenannte Event Forwarding Diskriminatoren (EFD) vorverarbeitet. Ein EFD erhält von einem oder mehreren verwalteten Objekten gesendete Ereignismeldungen und filtert anhand von als "discriminiator construct" bezeichneten Filterkriterien diejenigen der Ereignismeldungen aus, die für das Management-Objekt irrelevant sind. Die für das Management-Objekt relevanten, den Filterkriterien genügenden spontanen Ereignismeldungen sendet ein EFD als sogenannte Ereignisberichte (engl. "event reports") an das jeweilige Management-Objekt.

Als Ereignismeldungen werden Meldungen bezeichnet, die spontan bei Eintreten eines Ereignisses gesendet werden, während Ereigniszustandsnachrichten Ereignisse betreffen, die bereits länger zurückliegen können. Mit einem Oberbegriff "Ereignisinformationen" werden Ereignismeldungen und Ereigniszustandsnachrichten bezeichnet. Ereigniszustände und Ereignismeldungen betreffen nicht nur übliche Objektattribute, beispielsweise "in Betrieb" oder "außer Betrieb", sondern beispielsweise auch sogenannte Environmental-Alarme, mit denen z.B. ein Feueralarm gemeldet wird.

Ein EFD leitet lediglich Ereignismeldungen an das Management-Objekt weiter, die spontan bei Auftreten eines Ereignisses von den verwalteten Objekten gesendet werden. Wenn ein Management-Objekt und ein diesem zugeordneter EFD beispielsweise auf unterschiedlichen Rechnersystemen betrieben werden, kann jedoch die Übertragung der Ereignismeldungen temporär, z.B. aufgrund einer Leitungsüberlastung oder einer Verbindungsstörung unterbrochen sein, so dass spontane Ereignismeldungen verloren gehen und das Management-Objekt den momentanen Ereigniszustand des jeweiligen verwalteten Objektes nicht mehr kennt. Das Management-Objekt könnte zwar beispielsweise ein sogenanntes Log-Register abfragen, in das die jeweiligen Ereignismeldungen z.B. in der Reihenfolge ihres Eingangs eingetragen sind. Allerdings müsste das Management-Objekt dann aufwendig aus den lediglich historisch erfassten Ereignismeldungen einen aktuellen Ereigniszustand des verwalteten Objektes herleiten.

Es ist daher Aufgabe der vorliegenden Erfindung, in einem Netzwerk-Management-System die Verarbeitung von Ereignisinformationen zu optimieren, die ein Management-Objekt von einem verwalteten Objekt benötigt.

Diese Aufgabe wird gelöst durch ein Verfahren gemäß der technischen Lehre des Anspruchs 1. Zur Lösung der Aufgabe sind ferner ein Diskriminator-Objekt gemäß der technischen Lehre des Anspruchs 11, ein Management-Objekt gemäß der technischen Lehre des Anspruchs 13 sowie ein verwaltetes Objekt gemäß der technischen Lehre des Anspruchs 16 vorgesehen.

Der Erfindung liegt dabei der Gedanke zugrunde, dass ein Management-Objekt z.B. aufgrund eines Bedienerbefehls bei einem Diskriminator-Objekt einen aktuellen Ereigniszustand zumindest eines verwaltetes Objektes abfragen kann. Das Management-Objekt kann beispielsweise ein Netzwerk-Management-Rechner oder ein auf einem Rechner ausgeführtes Netzwerk-Management-Programm mit einem oder mehreren Prozessen sein. Die Abfrage des Ereigniszustandes kann auch durch ein zeitgesteuertes, dem Diskriminator-Objekt oder dem Management-Objekt zugeordnetes Steuerprogramm ausgelöst werden, das beispielsweise zyklisch für eine Aktualisierung eines in dem Management-Objekt abgelegten Ereigniszustandes sorgt. Das Diskriminator-Objekt, das durch eine Diskriminator-Rechner, vorzugsweise jedoch durch einen von einem Rechner ausgeführten Prozess oder eine Gruppe von Prozessen gebildet wird, fragt bei dem jeweiligen verwalteten Objekt, das beispielsweise eine Vermittlungsstelle oder einen Dienst repräsentiert, dessen Ereigniszustand ab. Dazu wird im Speicher des verwalteten Objektes ein Ereignisspiegel geführt, der den Ereigniszustand des verwalteten Objektes wiederspiegelt. Beispielsweise ist dort vermerkt, ob eine Funktion gestört oder in Betrieb ist oder welche Konfigurationsdaten gerade geladen sind. Das verwaltete Objekt meldet seinen Ereigniszustand an das Diskriminator-Objekt. Dieses filtert den von dem verwalteten Objekt gemeldeten Ereigniszustand anhand von Filterkriterien, und sendet nur denjenigen Anteil an das Management-Objekt weiter, der für das Management-Objekt relevante Ereignisse betrifft.

Vorteilhafterweise berichtet das Diskriminator-Objekt nur diejenigen Ereignisse an das Management-Objekt, die den aktuellen Zustand des mindestens einen verwalteten Objekts wiedergeben. Sofern ein Ereignis durch ein neues Ereignis überholt ist, beispielsweise eine Störung oder eine Grenzwertverletzung nicht mehr anliegt, wird es nicht an das Management-Objekt berichtet.

In einer Variante der Erfindung filtert das Diskriminator-Objekt überholte Ereignisse aus, während in einer anderen Variante das mindestens eine verwaltete Objekt bereits nur solche Ereignismeldungen an das Diskriminator-Objekt sendet, die einen aktuellen Zustand betreffen. Mischformen dieser beiden Varianten sind ohne Weiteres möglich.

Das Diskriminator-Objekt kann den mindestens einen Ereigniszustand unmittelbar an das Management-Objekt berichten, beispielsweise mit Hilfe von dessen Adresse, die es in der Anforderungsnachricht zur Abfrage des Ereigniszustandes angegeben hat. Es ist jedoch auch möglich, dass das Diskriminator-Objekt den mindestens einen Ereigniszustand über ein Versende-Objekt an das Management-Objekt berichtet, z.B. über den eingangs erwähnten Event Forwarding Discriminator (EFD) gemäß der ITU-Recommendation X.734. Der EFD trägt dann beispielsweise in die jeweiligen Ereignisnachrichten mit Hilfe einer Zuordnungstabelle die physikalische Adresse des Management-Objektes ein, die einer durch das Diskriminator-Objekt in der jeweiligen Ereignisnachricht vorgegebenen logischen Adresse zugeordnet ist.

In einer weiteren Variante der Erfindung berichtet das Diskriminator-Objekt nicht nur einen abgefragten Ereigniszustand an das Management-Objekt, sondern auch spontan bei Auftreten eines Ereignisses von dem mindestens einen verwalteten Objekt gesendete Ereignismeldungen. Somit erfüllt das erfindungsgemäße Diskriminator-Objekt beispielsweise auch die Funktionen des eingangs erwähnten Event Forwarding Discriminators.

Einem erfindungsgemäßen Diskriminator-Objekt kann jeweils zumindest ein anzuwendenden Filterkriterium zugeordnet sein. Es ist jedoch auch möglich, dass die jeweils von dem Diskriminator-Objekt anzuwendenden Filterkriterien, beispielsweise das eingangs erwähnte "discriminator construct", durch das Management-Objekt individuell bestimmbar sind. Dazu kann das Management-Objekt die jeweils für einen Ereignisbericht anzuwendenden Filterkriterien an das Diskriminator-Objekt senden. Ferner könnte das Management-Objekt auch eine Kennung senden, anhand derer das Diskriminator-Objekt die zu verwendenden Filterkriterien ermitteln kann.

In einer bevorzugten Variante der Erfindung addressiert das Management-Objekt die Anforderungsnachricht an das Diskriminator-Objekt mit einem Objektnamen, aus dem Kriterien, insbesondere zu verwendende Filterkriterien für den derart abgefragten Ereignisbericht ermittelbar sind. Aus Sicht des oder der Management-Objekte existieren dabei mehrere separate, jeweils mit einem individuellen Objektnamen bezeichnete logische Diskriminator-Objekte. In Abhängigkeit davon, mit welchem Objektnamen das Diskriminator-Objekt sozusagen "angesprochen" wird, fragt es eines oder mehrere verwaltete Objekte ab und wendet dann auf die jeweils gemeldeten Ereigniszustände die jeweiligen Filterkriterien an.

Dabei ist vorteilhafterweise dem Diskriminator-Objekt ein Anforderungs-Manager (engl. Request-Manager) vorgeschaltet, der eine von dem Management-Objekt gesendete Anforderungsnachricht über einen dem verwendeten Objektnamen zugeordneten Übertragungskanal, vorzugsweise einen sogenannten logischen Ü-bertragungskanal, an das Diskriminator-Objekt weiterleitet. Das Diskriminator-Objekt ermittelt die zur Bearbeitung der Anforderungsnachricht abzufragenden verwalteten Objekte und/oder die anzuwendenden Filterkriterien anhand des von dem Anforderungs-Manager benutzten Übertragungskanals.

Es ist jedoch grundsätzlich auch möglich, dass der Anforderungs-Manager die Anforderungsnachrichten, die unterschiedliche Objektnamen als Adressinformation enthalten, an das Diskriminator-Objekt auf einem gemeinsamen Übertragungskanal sendet und der jeweiligen Anforderungsnachricht die anzuwendenden Filterkriterien oder eine Kennung hinzufügt, welche Filterkriterien anzuwenden sind.

Jedenfalls kann ein einziges Diskriminator-Objekt mit Hilfe der verschiedenen Objektnamen unterschiedliche logische Diskriminator-Objekte oder Diskriminator-Agenten sozusagen simulieren und ist somit universell einsetzbar.

Es versteht sich, dass beliebige Kombinationen der in den Unteransprüchen sowie in der Beschreibung angegebenen Maßnahmen möglich sind.

Im Folgenden werden die Erfindung und ihre Vorteile anhand eines Ausführungsbeispiels unter Zuhilfenahme der Zeichnung dargestellt.
- Figur 1: zeigt eine schematische Anordnung zur Ausführung des erfindungsgemäßen Verfahrens mit Management-Objekten MO1, MO2, Diskriminator-Objekten DO1, DO2, verwalteten Objekten VO1, VO2 und VO3 und einem Anforderungs-Manager RM.

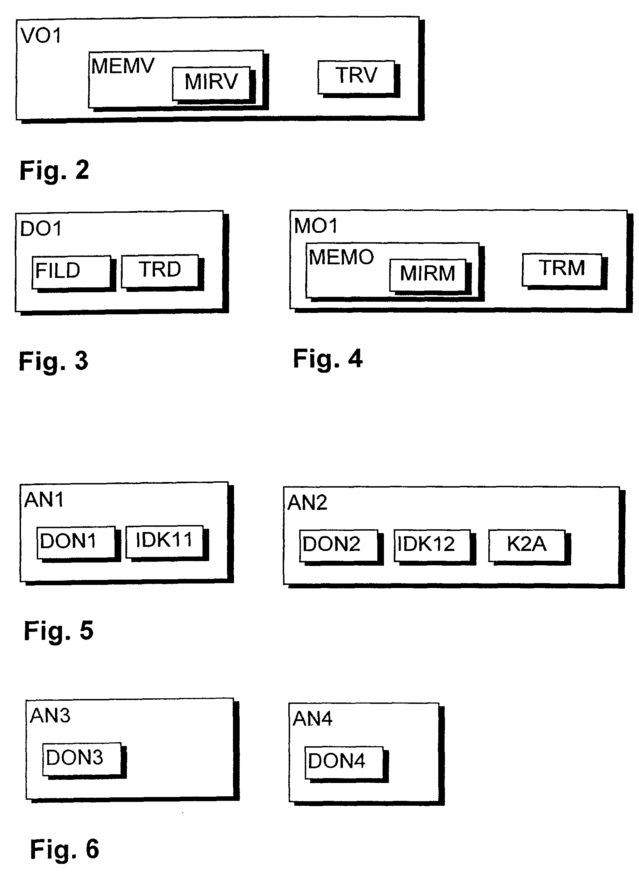

- Figur 2: zeigt schematisch und exemplarisch für die verwalteten Objekte VO1, VO2, VO3 das verwaltete Objekt VO1.
- Figur 3: zeigt schematisch und exemplarisch für die Diskriminator-Objekte DO1 und DO2 das Diskriminator-Objekt DO1.
- Figur 4: zeigt schematisch und exemplarisch für die Management-Objekte MO1, MO2 das Management-Objekt MO1.
- Figur 5: zeigt Anforderungsnachrichten AN1 und AN2.
- Figur 6: zeigt Anforderungsnachrichten AN3 und AN4.

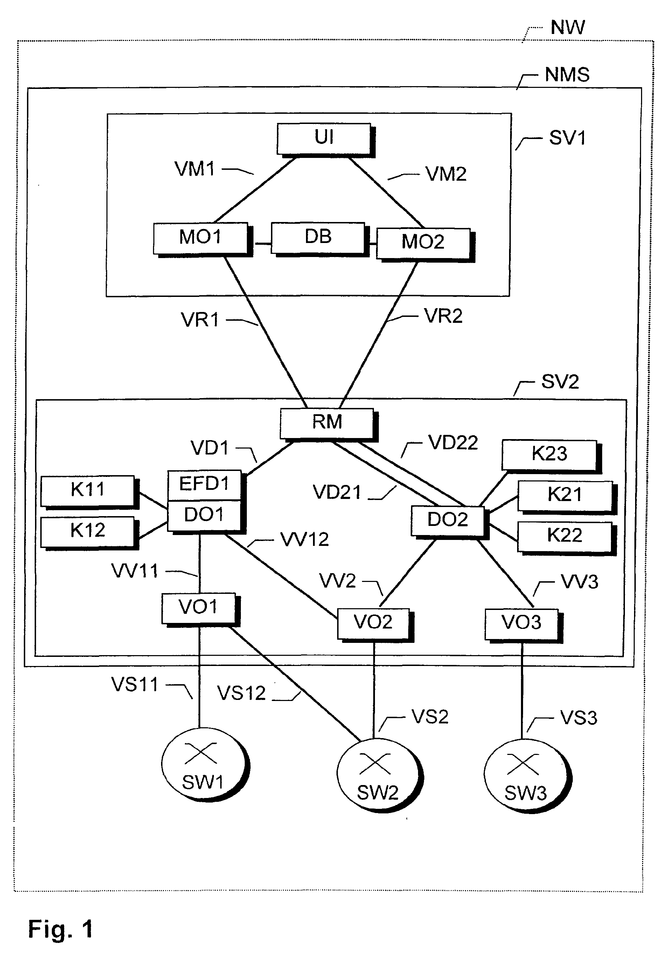

Figur 1 zeigt ein Telekommunikationsnetz NW mit Servern SV2 und SV1 eines Netzwerk-Management-Systems NMS mit einer offenen Systemarchitektur sowie Netzwerkeinrichtungen SW1, SW2 und SW3, die beispielsweise Vermittlungsstellen, Router oder Diensterechner zur Erbringung von Diensten eines Intelligenten Netzes (IN) sind. Die Netzwerkeinrichtungen SW1, SW2 und SW3 werden jeweils durch das Netzwerk-Management-System NMS verwaltet, gewartet und betrieben. Das Telekommunikationsnetz NW umfasst auch weitere, nicht dargestellte Einrichtungen, beispielsweise weitere Netzwerkeinrichtungen oder von den Netzwerkeinrichtungen SW1, SW2 und SW3 bediente Endgeräte. Die Netzwerkeinrichtungen SW1, SW2 und SW3 werden von sogenannten verwalteten Objekten (engl. managed objects) VO1, VO2 bzw. VO3 repräsentiert. Die verwalteten Objekte VO1, VO2, VO3 sind vorliegend Prozesse oder Gruppen von Prozessen, deren Programmcode durch den Server SV2 ausgeführt wird und die von den Netzwerkeinrichtungen SW1, SW2 und SW3 an das Netzwerk-Management-System NMS gesendete Ereignisinformationen vorverarbeiten. Ferner können die Netzwerkeinrichtungen SW1, SW2 und SW3 über die verwalteten Objekte VO1, VO2, VO3 gesteuert werden. Die verwalteten Objekte VO1, VO2, VO3 sind beispielsweise sogenannte Proxy-Agenten, welche die Netzwerkeinrichtungen SW1, SW2 und SW3 für das Netzwerk-Management-System NMS zumindest in Bezug auf vorbestimmte Eigenschaften sozusagen simulieren. Ein Proxy-Agent setzt die von dem Netzwerk-Management-System NMS gesendeten Instruktionen so um, dass sie vom gemanagten Netzwerkeinrichtungen SW1, SW2 und SW3 verstanden werden. Die verwalteten Objekte VO1, VO2, VO3 können auch nur bestimmte Eigenschaften der Netzwerkeinrichtungen SW1, SW2 und SW3 repräsentieren, beispielsweise deren Alarme.

Es ist jedoch auch möglich, dass zur Steuerung der Netzwerkeinrichtungen SW1, SW2 und SW3 und zur Verarbeitung von deren Ereignisinformationen jeweils separate verwaltete Objekte vorgesehen sind. Weitere, den verwalteten Objekten VO1, VO2, VO3 ähnliche Objekte könnten vorgesehen sein, um einen Netzwerk-Dienst oder eine sonstige Ressource des Telekommunikationsnetzes NW zu repräsentieren. Ferner könnten mehrere verwaltete Objekte einer Ressource zugeordnet sein und diese unterschiedlich repräsentieren. Beispielsweise könnte das verwaltete Objekt VO1 die Alarme der Netzwerkeinrichtung SW1 und das verwaltete Objekt VO2 deren Messwerte oder deren aktuell geladene Konfigurationsdaten repräsentieren. Die verwalteten Objekte VO1, VO2, VO3 könnten auch unmittelbar durch die Netzwerkeinrichtungen SW1, SW2 bzw. SW3 gebildet werden oder von diesen ausgeführte Prozesse sein.

Zur Verwaltung, zum Betreiben und Warten der verwalteten Objekte VO1, VO2, VO3 sind Management-Objekte MO1, MO2 vorgesehen, die als von dem Server SV1 ausgeführte Prozesse oder Gruppen von Prozessen ausgebildet sind. Es ist auch möglich, dass der Server SV1 selbst ein Management-Objekt bildet oder dass jedes der Management-Objekte MO1, MO2 ein durch einen separaten Rechner des Netzwerk-Management-Systems ausgeführter Prozess ist. In dem Server SV1 ist vorliegend ferner einer Bedienoberfläche UI vorgesehen, über die von den Netzwerkeinrichtungen SW1, SW2 und SW3 gemeldete Ereignisse, beispielsweise die Verletzung eines Grenzwertes oder eine Aktivierung neu geladener Konfigurationsdaten, auf einer Anzeigeeinrichtung, beispielsweise einem Monitor, sowie gegebenenfalls auch akustisch ausgegeben werden. Über die Bedienoberfläche UI kann ein Bediener auch Befehle zur Steuerung der Netzwerkeinrichtungen SW1, SW2 und SW3 an diese senden, beispielsweise eine Verbindung aktivieren oder deaktivieren.

Bei den nicht näher dargestellten Servern SV1 und SV2 handelt es ich um Rechner oder Rechnernetzwerke, die durch ein UNIX-Betriebssystem oder ein Windows-NT-Betriebssystem betrieben werden. Die Server SV1 und SV2 weisen Sende- und Empfangsmittel auf, beispielsweise LAN oder WAN Schnittstellenkarten, Modems oder dergleichen, mit denen Daten gesendet bzw. empfangen werden können. Ferner sind jeweils Speichermittel, beispielsweise Festplatten und RAM-Bausteine, sowie Steuermittel vorgesehen, beispielsweise jeweils ein Prozessor oder ein Cluster von Prozessoren. Ein solches Steuermittel führt Befehle eines Betriebssystems aus, das in den Speichermitteln gespeichert ist. Weiterhin sind in den Speichermitteln Programmcode-Sequenzen von Programm-Modulen gespeichert, die von den Steuermitteln ausgeführt werden und die Funktionen der Server SV1 und SV2 steuern. Solche Programm-Module sind im Server die Management-Objekte MO1 und MO2 und die Bedienoberfläche UI sowie im Server SV2 beispielsweise die verwalteten Objekte VO1 bis VO3. Die Sende- und Empfangsmittel, Steuermittel und Speichermittel der Server SV1 und SV2 sowie deren jeweilige interne Verbindungen untereinander sind in Figur 1 nicht dargestellt.

Die Netzwerkeinrichtungen SW1 und SW2 senden über Verbindungen VS11 bzw. VS12 Ereignisinformationen an die verwalteten Objekte VO1 bzw. VO2. Die Netzwerkeinrichtungen SW2 und SW3 senden über Verbindungen VS2 bzw. VS3 Ereignisinformationen an die verwalteten Objekte VO2 bzw. VO3. Dabei melden die Netzwerkeinrichtungen SW1, SW2 und SW3 z.B. Grenzwertverletzungen, ihre aktuelle Systemlast oder Verkehrswerte von Verbindungen des Telekommunikationsnetzes NW. Die Ereignisinformationen werden beispielsweise als strukturierte Daten z.B. mit Hilfe der Basic Encoding Rules (BER) gemäß der Definitionen der International Telecommunication Union versandt. Die Ereignisinformationen zwischen den Netzwerkeinrichtungen SW1, SW2 und SW3 und den verwalteten Objekten VO1, VO2, VO3 können aber auch sogenannte Object-Request-Broker-Objekte (ORB) sein, z.B. gemäß der CORBA -Spezifikation (CORBA = Common Object Request Broker Architecture) der OMG (Object Management Group) oder der DCOM-Spezifikation der Firma Microsoft. Die Verbindungen VS11, VS12, VS2, VS3 sind lediglich schematisch dargestellt und führen vorzugsweise über ein separates Management-Netzwerk, beispielsweise über ein WAN (Wide-Area-Network).

Von den Netzwerkeinrichtungen SW1, SW2 und SW3 gesendete Ereignisinformationen werden von den verwalteten Objekten VO1, VO2, VO3 über Sende- und Empfangsmittel TRV empfangen und in einem Speichermittel MEMV gespeichert. Die Sende- und Empfangsmittel TRV sowie das Speichermittel MEMV sind vorliegend als entsprechende Programmfunktionen der verwalteten Objekte VO1, VO2, VO3 ausgeführt. Somit ist in den verwalteten Objekte VO1, VO2, VO3 jeweils ein Abbild oder ein Spiegel MIRV der in den Netzwerkeinrichtungen SW1, SW2 und SW3 aufgetretenen Ereignisse abgelegt.

Die verwalteten Objekte VO1, VO2, VO3 melden die jeweiligen Ereignisinformationen als Ereignisinformations-Objekte über Verbindungen VV11, VV12 und VV2, VV3 an Diskriminator-Objekte DO1 bzw. DO2, die vorliegend ebenfalls als von dem Server SV2 ausgeführte Prozesse oder Agenten ausgebildet sind. Die Diskriminator-Objekte DO1, DO2 empfangen die Ereignisinformationen über Sende- und Empfangsmittel TRD und filtern die Ereignisinformationen anhand von Filterkriterien K11, K12, K21, K22 mit Hilfe von Filtermitteln FILD. Die Sende- und Empfangsmittel TRD sowie die Filtermittel FILD sind vorliegend als entsprechende Programmfunktionen der Diskriminator-Objekte DO1, DO2, DO3 ausgeführt und bilden Diensterbringungsmittel zur Erbringung von Diensten für die Management-Objekte MO1, MO2.

Beispielsweise filtert das Diskriminator-Objekt DO1 die für das Management-Objekt MO1 bestimmten, von dem verwalteten Objekt VO1 stammenden Ereignisinformationen anhand der Filterkriterien K11 und die für das Management-Objekt MO2 bestimmten, vom verwalteten Objekt VO2 stammende Ereignisinformationen anhand der Filterkriterien K12. Die Filterkriterien K11, K12 und K21, K22 sind Attribute der Diskriminator-Objekte DO1 bzw. DO2 und werden z.B. als Diskriminator-Konstrukte bezeichnet. Die Filterkriterien K11, K12 und K21, K22 geben die Bedingungen an, denen von den verwalteten Objekten VO1, VO2, VO3 gesendete Ereignisinformationen genügen müssen, wenn sie an die Management-Objekte MO1, MO2 gesendet werden sollen. Die Filterkriterien K11, K12, K21, K22 können z.B. als von den Filtermitteln FILD anzuwendende Prüftabellen ausgestaltet sein oder als von den Filtermitteln FILD aufzurufende Prüffunktionen. Jedenfalls werden von den Filtermitteln FILD die für die Management-Objekte MO1, MO2 jeweils irrelevante Ereignisse betreffende Ereignisinformationen ausgefiltert, wobei beispielsweise eine unkritische Grenzwertverletzung oder ein zyklisch gemeldeter Messwert ausgesondert werden, während eine kritische Störung oder ein sonstiger Alarm weitergeleitet wird.

Die Diskriminator-Objekte DO1 und DO2 senden nicht ausgefilterte Ereignisinformationen über Verbindungen VD1 bzw. VD21, VD22 an einen Anforderungs-Manager RM, der die Ereignisinformationen über Verbindungen VR1 und VR2 an die Management-Objekte MO1 bzw. MO2 weitermeldet. Das Diskriminator-Objekt DO1 trägt in die von ihm gesendeten Ereignisinformationen lediglich eine logische Adresse der Management-Objekte MO1, MO2 ein, während ein dem Diskriminator-Objekt DO1 zum Anforderungs-Manager RM hin vorgeschaltetes Versende-Objekt EFD1, beispielsweise ein Event Forwarding Diskriminator (EFD) gemäß der ITU-Recommendation X.734 (ITU = International Telecommunication Union), eine der jeweiligen logischen Adresse zugeordnete physikalische Adresse in die jeweiligen Ereignisinformationen einträgt. Das Diskriminator-Objekt DO2 hingegen trägt ohne Mitwirkung eines Versende-Objektes bereits die notwendigen physikalischen Adressen ein.

Für das Diskriminator-Objekt DO1 kann beispielsweise vorgesehen sein, dass es an das Versende-Objekt EFD1 alle, also nicht nur die zum Versand sondern auch die zum Ausfiltern bestimmten Ereignisinformationen weiterleitet, diesen jedoch anhand der Filterkriterien K11 und K12 ermittelte Attribute "Versenden" oder "Nicht-Versenden" hinzufügt.

Es ist auch möglich, dass das ein Diskriminator-Objekt von verwalteten Objekten gesendete Ereignisinformationen zumindest teilweise dupliziert und mehrfach an ihm zugeordnete Management-Objekte versendet. Beispielsweise könnte das Diskriminator-Objekt DO1 von den verwalteten Objekten VO1, VO2 gemeldete Ereignisinformationen jeweils an beide Management-Objekte MO1, MO2 senden. Das Diskriminator-Objekt DO1 erhält die Ereignisinformationen z.B. als Eingangsobjekte und ermittelt anhand der Filterkriterien K11 und K12, welche der Eingangsobjekte dem Management-Objekt MO1 und welche dem MO2 zuzusenden sind. Gegebenenfalls kopiert das Diskriminator-Objekt DO1 ein solches Eingangsobjekt, um es sowohl an das Management-Objekt MO1 als auch an das Management-Objekt MO2 zu senden. Jedenfalls fügt das Diskriminator-Objekt DO1 die logischen Adressen der Management-Objekte MO1, MO2 jeweils als Attribute zu den Eingangsobjekten hinzu und leitet diese dann dem Versende-Objekt EFD1 zu.

Die Management-Objekte MO1, MO2 empfangen die von den Diskriminator-Objekten DO1 und DO2 gesendeten Ereignisinformationen über Sende- und Empfangsmittel TRM und speichern die Ereignisinformationen beispielsweise in Ereignisspiegeln MIRM, die in ihren Speichermitteln MEMO vorgesehen sind. Im Ausführungsbeispiel speichern die Management-Objekte MO1, MO2 die Ereignisinformationen zusätzlich in einer Datenbank DB des Servers SV1. Ferner leiten die Management-Objekte MO1, MO2 die Ereignisinformationen beispielsweise über in dem Server SV1 vorgesehene interne, vorzugsweise als Interprozess-Verbindungen ausgestaltete Verbindungen VM1, VM2 an die Bedienoberfläche UI zur Ausgabe für einen Bediener weiter. Die Sende- und Empfangsmittel TRM sowie die Speichermittel MEMO sind vorliegend als entsprechende Programmfunktionen der Management-Objekte MO1, MO2 ausgeführt.

Die Verbindungen VR1 und VR2 führen beispielsweise über ein die Server SV1 und SV2 verbindendes LAN (Local Area Network). Die Verbindungen VV11, VV12, W2, W3 sowie VD1, VD21, VD22 sind interne Verbindungen im Server SV2, die über physikalische, insbesondere aber über logische Übertragungskanäle führen, und werden beispielsweise über bekannte, z.B. vom Betriebssystem des Servers SV2 bereitgestellten Interprozess-Kommunikationsmechanismen hergestellt.

Zur Datenübertragung auf den Verbindungen VR1 und VR2 wird beispielsweise das CMIP-Protokoll (Common Management Information Protocol) der OSI (Open Systems Interconnection) oder das TCP/IP- basierte Simple Network Management Protocol (= SNMP; TCP/IP = Transmission Control Protocol / Internet Protocol) eingesetzt, die jeweils zum Transport von Managementinformationen geeignet sind.

Soweit die dargestellte spontane Übermittlung von Ereignisinformationen durch die Netzwerkeinrichtungen SW1, SW2 und SW3 an die Management-Objekte MO1, MO2 störungsfrei verläuft, sind in dem Server SV1 die Ereigniszustände der Netzwerkeinrichtungen SW1, SW2 und SW3 bekannt. Fallen jedoch beispielsweise die Verbindungen VR1, VR2 aufgrund einer Leitungsstörung kurzeitig aus, gehen möglicherweise von den Netzwerkeinrichtungen SW1, SW2 und SW3 spontan gemeldete Ereignisinformationen verloren.

Wenn die Management-Objekte MO1, MO2 z.B. von einem nicht dargestellten Überwachungsprozess des Servers SV1 eine Meldung erhalten, dass eine solche Leitungsstörung "gehend" ist, also nicht mehr vorliegt, senden sie Anforderungsnachrichten zur Abfrage der Ereigniszustände der verwalteten Objekte VO1, VO2, VO3 an die Diskriminator-Objekte DO1 und DO2, um somit beispielsweise ihre Ereignisspiegel MIRM und die Datenbank DB wieder zu aktualisieren.

Dabei bilden die Diskriminator-Objekte DO1 bzw. DO2 Dienst-Objekte und die Management-Objekte MO1, MO2 Anforderungs-Objekte, wobei die Dienst-Objekte Dienste für die Anforderungs-Objekte erbringen. Die Management-Objekte MO1, MO2 könnten auch als Manager, die Diskriminator-Objekte DO1 und DO2 als Agenten bezeichnet werden.

Es ist auch möglich, dass von der Bedienoberfläche UI Befehle an die Management-Objekte MO1, MO2 gesendet werden, die an die Diskriminator-Objekte DO1 und DO2 gerichtete Anforderungsnachrichten auslösen. Weiter könnten auch die Diskriminator-Objekte DO1 und DO2 und/oder die verwalteten Objekte VO1, VO2, VO3 an die Management-Objekte MO1, MO2 melden, dass eine Divergenz zwischen den jeweiligen Ereignisspiegeln MIRV bzw. MIRM aufgetreten ist, worauf dann die Management-Objekte MO1, MO2 entsprechende Anforderungsnachrichten zur Ereigniszustandsabfrage an die Diskriminator-Objekte DO1 und DO2 senden.

Ferner könnte ein in dem Server SV1 und/oder in dem Server SV2 vorgesehenes zeitgesteuertes Steuerprogramm Anforderungsnachrichten versenden. Das zeitgesteuerte Steuerprogramm sendet die Anforderungsnachrichten zu vorbestimmten Zeitpunkten, beispielsweise einmal stündlich oder an einigen Wochentagen an die Diskriminator-Objekte DO1 und DO2. Das zeitgesteuerte Steuerprogramm könnte ein als separater Prozess ausgeführter, sogenannter externer Scheduler sein oder auch ein interner Scheduler, der z.B. als eine Programmfunktion in das Management-Objekt MO1 oder in das Diskriminator-Objekt DO1 integriert ist.

Am Beispiel von Anforderungsnachrichten AN1 und AN2, mit denen das Management-Objekt MO1 bei dem Diskriminator-Objekt DO1 die Ereigniszustände der verwalteten Objekte VO1 bzw. VO2 anfordert, soll im Folgenden eine erste Variante zur Bearbeitung von derartigen Anforderungsnachrichten dargestellt werden. Bei den Anforderungsnachrichten AN1 und AN2 handelt es sich beispielsweise um sogenannte "GET"-, "EVENT-REPORT"- oder "ACTION"-Nachrichten, die im Rahmen der Common Management Information Services (CMIS) definiert sind oder um entsprechende SNMP-Anforderungsnachrichten. Es ist auch möglich, dass die Anforderungsnachrichten AN1 und AN2 in sonstiger Form von Objekten versandt werden, beispielsweise in Form von CORBA-Objekten. Zur Übertragung der Objekte kann dann das durch die bereits erwähnte OMG definierte Internet InterObjectRequestBroker Protocol (IIOP) eingesetzt werden, das im Rahmen des TCP/IP übertragen werden kann (TCP/IP = Transmission Control Protocol / Internet Protocol). Ferner könnten die Anforderungsnachrichten AN1 und AN2 auch sogenannte Remote-Procedure-Calls (RPCs) sein, mit denen das Management-Objekt MO1 die als Prozesse oder "Prozeduren" ausgebildeten verwalteten Objekte VO1 bzw. VO2 im Server SV2 aufruft.

Das Management-Objekt MO1 sendet die Anforderungsnachrichten AN1 und AN2 über die Verbindung VR1 an den Anforderungs-Manager RM, der die Anforderungsnachrichten AN1 und AN2 mit nicht näher dargestellten, beispielsweise als Programmfunktionen gestalteten Sende- und Empfangsmitteln empfängt und an das Diskriminator-Objekt DO1 weiterleitet. In der Anforderungsnachricht AN1 ist "DON1" als Objektnamen und somit als Adressangabe für das Diskriminator-Objekt DO1 angegeben, in der Anforderungsnachricht AN2 als Objektnamen und Adressangabe "DON2". Die Objektnamen DON1 und DON2 sind dem Diskriminator-Objekt DO1 zugeordnet und dienen zu dessen logischer Adressierung. Aus Sicht des Management-Objektes MO1 existieren dabei zwei Dienst-Objekte: ein mit DON1 bezeichnetes Diskriminator-Objekt, das als Dienst den Ereigniszustand des verwalteten Objektes VO1 abfragt, und ein mit DON2 bezeichnetes Diskriminator-Objekt, das als Dienst den Ereigniszustand des verwalteten Objektes VO2 abfragt. Die Sende- und Empfangsmittel TRM des Management-Objekts MO1 tragen in Abhängigkeit von dem jeweils geforderten Dienst die Objektnamen DON1 bzw. DON2 in die jeweilige Anforderungsnachricht ein.

Der Anforderungs-Manager RM ermittelt anhand der Objektnamen DON1 bzw. DON2 z.B. mit Hilfe einer Zuordnungstabelle Objektnamen-zu-Dienst-Objekt und/oder einem vorbestimmten Zuordnungsalgorithmus, dass die Anforderungsnachrichten AN1 und AN2 für das Diskriminator-Objekt DO1 bestimmt sind. Dabei ist es auch möglich, dass der Anforderungs-Manager RM eine zusätzliche Kennung in die Anforderungsnachrichten AN1 und AN2 einfügt, anhand derer das Diskriminator-Objekt DO1 den jeweils zu erbringende Dienst ermitteln kann.

Das Diskriminator-Objekt DO1 empfängt die Anforderungsnachrichten AN1 und AN2 mit seinen Sende- und Empfangsmitteln TRD. Anhand der als Kennung dienenden Objektnamen DON1 und DON2 erkennt das Diskriminator-Objekt DO1, welchen Dienst es erbringen soll, nämlich dass es dem Management-Objekt MO1 die Ereigniszustände der verwalteten Objekte VO1 bzw. VO2 berichten soll. Eine entsprechende Zuordnung der Objektnamen DON1 und DON2 zu einem jeweils zu erbringenden Dienst ist vorteilhafterweise in den Konfigurationsdaten des Diskriminator-Objekts DO1 abgelegt.

Das Diskriminator-Objekt DO1 sendet zur Bearbeitung der Anforderungsnachrichten AN1 und AN2 über die Verbindungen VV11 bzw. VV12 jeweils eine Abfragenachricht zur Abfrage des Ereigniszustandes der verwalteten Objekte VO1 bzw. VO2. Diese melden die in ihren jeweiligen Ereignisspiegeln MIRV abgelegten Ereigniszustände der Netzwerkeinrichtungen SW1 bzw. SW2 in einzelnen Ereigniszustands-Nachrichten oder in einem zusammenhängenden Ereigniszustandsbericht an das Diskriminator-Objekt DO1. Es ist auch möglich, dass die verwalteten Objekte VO1, VO2 zudem noch Abfragenachrichten an die Netzwerkeinrichtungen SW1, SW2 zur Abfrage von deren jeweils aktuellen Ereigniszuständen, beispielsweise zur Abfrage von Störungen, versendet.

Das Diskriminator-Objekt DO1 empfängt die Ereigniszustandsnachrichten über seine Sende- und Empfangsmittel TRD und überprüft mit Hilfe der Filtermittel FILD, ob die Ereigniszustands-Nachrichten für das Management-Objekt MO1 relevante Ereignisse betreffen Die Filtermittel könnten in der erwähnten Weise die Filterkriterien K11 und K12 verwenden, um die von den verwalteten Objekten VO1 bzw. VO2 stammenden Ereigniszustandsnachrichten zu filtern. Die Objektnamen DON1 und DON2 wären dabei Kennungen zur Ermittlung der zu verwendenden Filterkriterien K11 bzw. K12, die Bestandteil der Konfigurationsdaten für das Diskriminator-Objekt DO1 sind. Vorliegend sind jedoch in den Anforderungsnachrichten AN1 und AN2 eigens Kennungen IDK11 bzw. IDK12 angegeben, die das Diskriminator-Objekt DO1 zur Verwendung der Filterkriterien K11 bzw. K12 für die von den verwalteten Objekten VO1 bzw. VO2 gemeldeten Ereigniszustandsnachrichten anweist. Zusätzlich sind in der Anforderungsnachricht AN2 noch weitere Filterkriterien K2A angegeben, die zur Filterung von Ereigniszuständen heranzuziehen sind. Beispielsweise kann in den Filterkriterien K2A bestimmt sein, dass nur Alarmzustände, jedoch keine Messwerte des verwalteten Objektes VO2 an das Management-Objekt MO1 zu berichten sind.

In den Anforderungsnachrichten AN1 und AN2 können auch weitere, nicht näher erläuterte Angaben enthalten sein, beispielsweise die Adresse des Management-Objektes MO1, die als Zieladresse zur Rückmeldung der Ereigniszustände dient.

Wenn in einer Ereigniszustandsnachricht der Zustand eines für das Management-Objekt MO1 irrelevanten Ereignisses enthalten ist, wird sie ausgefiltert, ansonsten der Ereigniszustand an das Management-Objekt MO1 über den Anforderungs-Manager RM berichtet. Die jeweilige Nachricht wird durch das Diskriminator-Objekt DO1 gegebenenfalls in eine für das Management-Objekt MO1 verständliche Nachrichtenform umformatiert.

Im vorliegenden Beispiel melden die verwalteten Objekte VO1 und VO2 jeweils nur aktuell gültige Ereigniszustände. Prinzipiell könnte auch das Diskriminator-Objekt DO1 überprüfen, ob ein gemeldeter Ereigniszustand aktuell gültig ist. Wenn beispielsweise Messwerte zyklisch zu übermitteln sind, kann anhand einer einem jeweiligen Messwert hinzugefügten Zeitinformation festgestellt werden, ob ein vorbestimmter Übertragungszyklus für den Messwert eingehalten worden ist.

Das Management-Objekt MO1 empfängt die Ereigniszustandsnachrichten oder die Ereigniszustandsberichte von dem Diskriminator-Objekt DO1 über seine Sende- und Empfangsmittel TRM und aktualisiert die jeweiligen Ereignisse in seinem Ereignisspiegel MIRM sowie in der Datenbank DB. In dem Management-Objekt MO1 können dabei Mittel zur Plausibilitätskontrolle der Ereignisse vorgesehen sein, beispielsweise könnten Zeitinformationen, die einem gemeldeten Ereigniszustand beigefügt sind, mit zu einem gespeicherten Ereigniszustand abgelegten Zeitinformationen verglichen werden. Ferner könnten die Mittel zur Plausibilitätskontrolle eine Abweichung von einem im Ereignisspiegel MIRM Zustand eines Ereignisses zu einem von dem Diskriminator-Objekt DO1 gemeldeten Ereigniszustand ermitteln. Tritt eine solche Abweichung ein, wird beispielsweise einerseits eine Warnmeldung an der Bedienoberfläche UI ausgegeben und andererseits eine Sicherheitsabfrage an das den Ereigniszustand meldende verwaltete Objekt und/oder das Diskriminator-Objekt gesendet, in der diese zu einer Überprüfung angewiesen werden, ob die gemeldete Abweichung des Ereigniszustandes zutreffend ist.

Am Beispiel von Anforderungsnachrichten AN3 und AN3, mit denen das Management-Objekt MO2 bei dem Diskriminator-Objekt DO2 die Ereigniszustände der Netzwerkeinrichtungen SW2 bzw. SW3 anfordert, soll im Folgenden eine zweite Variante zur Bearbeitung von durch ein Anforderungs-Objekt an ein Dienst-Objekt gesendeten Anforderungsnachrichten dargestellt werden.

Das Management-Objekt MO2 sendet die Anforderungsnachrichten AN3 und AN4, in denen die Objektnamen DON3 bzw. DON4 als logische Adressen angegeben sind, an den Anforderungs-Manager RM. Aus Sicht des als Anforderungs-Objekt agierenden Management-Objektes MO2 existieren dabei zwei unabhängige Dienst-Objekte DON3 und DON4. Den logischen Dienst-Objekten DON3 und DON4 sind die Verbindungen VD21 bzw. VD22 als logischen Übertragungskanäle zugeordnet. Der Anforderungs-Manager RM ermittelt beispielsweise anhand einer Zuordnungsliste Objektnamen-zu-Übertragungskanal, dass er die Anforderungsnachricht AN3 auf der Verbindung VD21 und die Anforderungsnachricht AN4 auf der Verbindung VD22 an das Diskriminator-Objekt DO2 senden soll.

Das Diskriminator-Objekt DO2 ermittelt daraus, dass es die Anforderungsnachricht AN3 auf der Verbindung V21 erhält, dass es einen ersten Dienst für das Management-Objekt MO2 erbringen soll, nämlich das Melden des Ereigniszustandes des verwalteten Objektes VO2. Dementsprechend sendet es eine Abfrage- oder Anforderungsnachricht über die Verbindung VV2 an das verwaltete Objekt VO2, die dieses mit einer oder mehreren Nachrichten über seinen Ereigniszustand beantwortet. Diese Nachrichten filtert das Diskriminator-Objekt DO2 anhand der Filterkriterien K21, die für auf der Verbindung VD21 erhaltene Anforderungsnachrichten anzuwenden sind.

Enstprechendes gilt für die auf der Verbindung VD22 erhaltene Anforderungsnachricht AN4, in der ein zweiter Dienst bei dem Diskriminator-Objekt DO2 angefordert wird: das Abfragen des Ereigniszustandes des verwalteten Objektes VO3. Das Diskriminator-Objekt DO2 fragt daher über die Verbindung VV3 diesen Ereigniszustand ab und filtert die daraufhin erhaltenen Antwort-Nachrichten mit Hilfe der Filterkriterien K22, die auf der Verbindung VD22 erhaltenen Anforderungsnachrichten zugeordnet sind.

Die von dem Diskriminator-Objekt DO2 an das Management-Objekt MO2 berichteten, den Filterkriterien K21 und K22 genügenden Ereignisinformationen trägt das Management-Objekt MO2 in der bereits erwähnten Weise in seinen Ereignisspiegel MIRM ein.

Allein anhand der Zuordnung jeweils eines logischen Übertragungskanals VD21 und VD22 zu einem zu erbringenden Dienst kann das Diskriminator-Objekt DO2 diesen Dienst ermitteln. Daher könnten die Anforderungsnachrichten AN3 und AN4 oder daraus abgeleitete Anforderungsnachrichten prinzipiell auch ohne die Objektnamen DON3 bzw. DON4 als Identifizierer für den zu erbringenden Dienst von dem Anforderungs-Manager RM an das Diskriminator-Objekt DO2 gesendet werden.

Es ist auch möglich, dass ein Diskriminator-Objekt auf einem Übertragungskanal unterschiedliche Dienste betreffende und/oder unterschiedliche Management-Objekte betreffende Anforderungsnachrichten erhält. Beispielsweise könnte das Diskriminator-Objekt DO2 auf der Verbindung VD21 die Anforderungsnachrichten AN3 und AN2 erhalten, die jeweils eine Abfrage des Ereigniszustandes des verwalteten Objektes VO2 betreffen und in denen die Adresse der Management-Objekte MO2 bzw. MO1 als Quell-/Zielkennung angegeben ist. Das Diskriminator-Objekt DO2 fragt dann in der erläuterten Weise bei dem verwalteten Objekt VO2 dessen Ereigniszustand ab. Die daraufhin erhaltenen Ereignisinformationen filtert das Diskriminator-Objekt DO2 anhand der Filterkriterien K21, soweit sie die Quell-/Zielkennung MO2, also das Management-Objekt MO2 betreffen, und anhand von Filterkriterien K23, soweit sie das Management-Objekt MO1 betreffen.

Varianten und Weiterbildungen der Erfindung sind ohne Weiteres möglich:

Die Diskriminator-Objekte DO1 und DO2 könnten lediglich zur Abfrage von Ereigniszuständen bei den verwalteten Objekten VO1, VO2, VO3 vorgesehen sein. Für spontan von diesen gesendete Ereignismeldungen könnten separate Objekte oder Agenten vorgesehen sein, beispielsweise EFDs.

Die als Dienst-Objekte dienenden Diskriminator-Objekte DO1 und DO2 könnten den jeweils zu erbringenden Dienst, im Ausführungsbeispiel die für die Ereigniszustandsberichte anzuwendenden Filterkriterien auch aus einer Quellkennung der als Anforderungs-Objekte agierenden Management-Objekte MO1, MO2 ableiten. Wenn das Diskriminator-Objekt DO1 z.B. eine Anforderungsnachricht von dem Management-Objekt MO1 erhält, sendet es alle das verwaltete Objekt VO1 betreffenden Ereigniszustände, während es bei einer von dem Management-Objekt MO2 gesendeten Anforderungsnachricht, gegebenenfalls mit derselben Adresse für das Diskriminator-Objekt DO1 wie in der von dem Management-Objekt MO1 gesendeten Anforderungsnachricht, lediglich eine Auswahl von Ereigniszuständen sendet, beispielsweise besonders kritische Alarmzustände. Allgemeine Informationen hingegen, z.B. zyklischen Messwerte, werden anhand nicht dargestellter Filterkriterien ausgesondert.

Die als logische Dienst-Objekte agierenden Diskriminator-Objekte DO1 und DO2 könnten jeweils als eine Kaskade von Prozessen oder Agenten aufgebaut sein, wobei jeweils z.B. ein zentraler Steuerungsprozess oder Steuerungsagent die von den als Anforderungs-Objekte agierenden Management-Objekten MO1, MO2 Anforderungsnachrichten erhält und je nach gefordertem Dienst, an Sub-Prozesse oder Sub-Agenten weiterverteilen.

Die Diskriminator-Objekte DO1 und DO2 könnten ganz oder in Teilfunktionen teilweise in die verwalteten Objekte VO1, VO2, VO3 integriert sein.

Die Funktionen der Diskriminator-Objekte DO1 und DO2 können durch die Management-Objekte MO1, MO2 und/oder durch den Anforderungs-Manager RM steuerbar ausgestaltet sein. Beispielsweise könnte das spontane Senden von Ereignismeldungen durch die Diskriminator-Objekte DO1 und DO2 von den Management-Objekten MO1, MO2 gesperrt oder freigegeben werden.

Weiter könnten die Diskriminator-Objekte DO1 und DO2 ihren jeweiligen Status an die Management-Objekte MO1, MO2 und/oder den Anforderungs-Manager RM melden. Beispielsweise könnten die Diskriminator-Objekte DO1 und DO2 ihr Entstehen (engl. object creation), ihre Zerstörung (engl. object deletion), ihren Arbeitszustand (operational oder non-operational) oder eine Änderung in ihren Konfigurationsdaten oder Attributen (engl. attribute value change) melden.

Die Management-Objekte MO1, MO2, der Anforderungs-Manager RM, die Diskriminator-Objekte DO1 und DO2 und die verwalteten Objekte VO1, VO2, VO3 könnten jeweils einzeln oder in Gruppen von separaten, örtlich voneinander entfernten Rechnern oder Rechnernetzwerken ausgeführt werden. Weiter könnten andere Zuordnungen vorgesehen sein. Beispielsweise könnten das Management-Objekt MO1 und das Diskriminator-Objekt DO2 dem Server SV1 und das Management-Objekt MO2 und das Diskriminator-Objekt DO1 dem Server SV2 zugeordnet sein. Zum Abgleich der jeweils in den Servern SV1 und SV2 gespeicherten Ereigniszustände könnten dann das Management-Objekt MO1 an das Diskriminator-Objekt DO2 Anforderungsnachrichten und das Management-Objekt MO2 an das Diskriminator-Objekt DO1 Anforderungsnachrichten senden.

Ferner könnten die Server SV1 und SV2 separaten, aber miteinander vernetzten Netzwerk-Management-Systemen angehören.

Anders als in den gezeigten Beispielen, bei denen die Management-Objekte, die verwalteten Objekte und die Diskriminator-Objekte jeweils als Prozesse oder Prozessgruppen ausgebildet sind, deren Programmcode von einem Rechner oder Rechnernetzwerk ausgeführt wird, könnten die Objekte auch sozusagen durch Hardware gebildet werden. Beispielsweise könnten die verwalteten Objekte VO1 und VO2 durch die Netzwerkeinrichtung SW1 bzw. SW2 gebildet werden und das Diskriminator-Objekt DO1 ein den verwalteten Objekte VO1, VO2 zugeordneter Server.

## Patentansprüche

1. Verfahren für ein Netzwerk-Management-System (NMS) zur Verarbeitung von Ereignisinformationen bei dem
- zumindest ein durch ein Management-Objekt (MO1, MO2) verwaltetes Objekt (VO1, VO2, VO3) Ereignisinformationen versendet und
- anhand von Filterkriterien (K11, K12, K21, K22, K23; K2A) ermittelt wird, welche der Ereignisinformationen an das Management-Objekt (MO1, MO2) zu sendende Ereignisse betreffen,
**dadurch gekennzeichnet,**
- **dass** das Management-Objekt (MO1, MO2) oder ein zeitgesteuertes Steuerprogramm eine erste Anforderungsnachricht (AN1, AN2, AN3, AN4) zur Abfrage mindestens eines Ereigniszustandes des mindestens einen verwalteten Objektes (VO1, VO2, VO3) an ein Diskriminator-Objekt (DO1, DO2) sendet,
- **dass** das Diskriminator-Objekt (DO1, DO2) eine zweite Anforderungsnachricht an das mindestens eine verwaltete Objekt (VO1, VO2, VO3) zur Abfrage des mindestens einen Ereigniszustandes sendet,
- **dass** das mindestens eine verwaltete Objekt (VO1, VO2, VO3) zumindest den mindestens einen Ereigniszustand an das Diskriminator-Objekt (DO1, DO2) meldet und
- **dass** das Diskriminator-Objekt (DO1, DO2) den mindestens einen gemeldeten Ereigniszustand anhand der Filterkriterien (K11, K12, K21, K22, K23; K2A) überprüft und an das Management-Objekt (MO1, MO2) berichtet, wenn der mindestens eine Ereigniszustand ein für das Management-Objekt (MO1, MO2) relevantes Ereignis betrifft.

2. Verfahren nach Anspruch 1, **dadurch gekennzeichnet, dass** der mindestens eine von dem verwalteten Objekt (VO1, VO2, VO3) gemeldete Ereigniszustand aktuell gültig ist.

3. Verfahren nach Anspruch 1, **dadurch gekennzeichnet, dass** das Diskriminator-Objekt (DO1, DO2) überprüft, ob der mindestens eine von dem verwalteten Objekt (VO1, VO2, VO3) gemeldete Ereigniszustand aktuell gültig ist.

4. Verfahren nach Anspruch 1, **dadurch gekennzeichnet, dass** das Diskriminator-Objekt (DO1, DO2) den mindestens einen Ereigniszustand unmittelbar an das Management-Objekt (MO1, MO2) berichtet.

5. Verfahren nach Anspruch 1, **dadurch gekennzeichnet, dass** das Diskriminator-Objekt (DO1, DO2) den mindestens einen Ereigniszustand über ein Versende-Objekt (EFD1) an das Management-Objekt (MO1, MO2) berichtet.

6. Verfahren nach Anspruch 1, **dadurch gekennzeichnet, dass** das Diskriminator-Objekt (DO1, DO2) spontan von dem mindestens einen verwalteten Objekt (VO1, VO2, VO3) gesendete Ereignismeldungen empfängt, dass es die spontanen Ereignismeldungen anhand der Filterkriterien (K11, K12, K21, K22, K23; K2A) überprüft und dass es solche Ereignismeldungen an das Management-Objekt (MO1, MO2) berichtet, die ein für das Management-Objekt (MO1, MO2) relevantes Ereignis betreffen.

7. Verfahren nach Anspruch 1, **dadurch gekennzeichnet, dass** das Management-Objekt (MO1, MO2) dem Diskriminator-Objekt (DO1, DO2) zumindest teilweise die zu verwendenden Filterkriterien (K11, K12, K21, K22, K23; K2A) und/oder eine Kennung (DON1, DON2, DON3, DON4) sendet, anhand derer das Diskriminator-Objekt (DO1, DO2) die zu verwendenden Filterkriterien (K11, K12, K21, K22, K23; K2A) ermitteln kann.

8. Verfahren nach Anspruch 8, **dadurch gekennzeichnet, dass** das Diskriminator-Objekt (DO1, DO2) das mindestens eine abzufragende verwaltete Objekt (VO1, VO2, VO3) und/oder die zu verwendenden Filterkriterien (K11, K12, K21, K22, K23; K2A) anhand einer in der Anforderungsnachricht (AN1, AN2, AN3, AN4) enthaltenen Quell- und/oder Zielkennung und/oder anhand eines Übertragungskanals (VD21, VD22), insbesondere eines logischen Übertragungskanals, auf dem das Diskriminator-Objekt (DO1, DO2) die erste Anforderungsnachricht (AN1, AN2, AN3, AN4) erhält, ermittelt.

9. Verfahren nach Anspruch 1, **dadurch gekennzeichnet, dass** dem Diskriminator-Objekt (DO1, DO2) zumindest ein erster und ein zweiter Objektnamen (DON1, DON2, DON3, DON4) zugeordnet werden, dass das Management-Objekt (MO1, MO2) die erste Anforderungsnachricht (AN1, AN2, AN3, AN4) an das Diskriminator-Objekt (DO1, DO2) mit dem ersten oder dem zweiten Objektnamen (DON1, DON2, DON3, DON4) addressiert, wobei aus dem verwendeten ersten oder zweiten Objektnamen (DON1, DON2, DON3, DON4) das mindestens eine abzufragende verwaltete Objekt (VO1, VO2, VO3) und/oder die zu verwendenden Kriterien, insbesondere die zu verwendenden Filterkriterien (K11, K12, K21, K22, K23; K2A), und/oder zumindest ein Ziel für den derart abgefragten Ereignisbericht ermittelbar sind.

10. Verfahren nach Anspruch 9, **dadurch gekennzeichnet, dass** das Management-Objekt (MO1, MO2) die erste Anforderungsnachricht (AN1, AN2, AN3, AN4) an einen Anforderungs-Manager (RM) sendet und dass der Anforderungs-Manager (RM) die erste Anforderungsnachricht (AN1, AN2, AN3, AN4) über einen ersten oder einen zweiten, insbesondere logischen Übertragungskanal (VD21, VD22) an das Diskriminator-Objekt (DO1, DO2) weiterleitet, die dem für das Diskriminator-Objekt (DO1, DO2) verwendeten ersten bzw. zweiten Objektnamen (DON1, DON2, DON3, DON4) zugeordnet sind.

11. Diskriminator-Objekt (DO1, DO2) für ein Netzwerk-Management-System (NMS) zur Verarbeitung von Ereignisinformationen, das Empfangsmittel (TRD) zum Empfangen von Ereignisinformationen aufweist, die von zumindest einem durch ein Management-Objekt (MO1, MO2) verwalteten, dem Diskriminator-Objekt (DO1, DO2) zugeordneten Objekt (VO1, VO2, VO3) gesendet werden, und das anhand von Filterkriterien (K11, K12, K21, K22, K23; K2A) arbeitende Filtermittel (FILD) zum Ermitteln von denjenigen Ereignisinformationen aufweist, die an das Management-Objekt (MO1, MO2) zu sendende Ereignisse betreffen,
**dadurch gekennzeichnet,**
- **dass** die Empfangsmittel (TRD) zum Empfangen einer ersten von dem Management-Objekt (MO1, MO2) oder einem zeitgesteuerten Steuerprogramm gesendeten Anforderungsnachricht (AN1, AN2, AN3, AN4) zur Abfrage mindestens eines Ereigniszustandes des mindestens einen verwalteten Objektes (VO1, VO2, VO3) ausgestaltet sind,
- **dass** das Diskriminator-Objekt (DO1, DO2) Sendemittel (TRD) zum Senden einer zweiten Anforderungsnachricht an das mindestens eine verwaltete Objekt (VO1, VO2, VO3) zur Abfrage des mindestens einen Ereigniszustandes aufweist,
- **dass** die Empfangsmittel (TRD) zum Empfang des auf die zweite Anforderungsnachricht gemeldeten mindestens einen Ereigniszustandes ausgestaltet sind, und
- **dass** die Sendemittel (TRD) und die Filtermittel (FILD) derart ausgestaltet sind, dass das Diskriminator-Objekt (DO1, DO2) den mindestens einen Ereigniszustand anhand der Filterkriterien (K11, K12, K21, K22, K23; K2A) überprüfen und an das Management-Objekt (MO1, MO2) berichten kann, wenn der mindestens eine Ereigniszustand ein für das Management-Objekt (MO1, MO2) relevantes Ereignis betrifft.

12. Diskriminator-Objekt (DO1, DO2) nach Anspruch 11, **dadurch gekennzeichnet, dass** es Programmcode enthält, der von einem Steuermittel eines Servers ausgeführt werden kann.

13. Management-Objekt (MO1, MO2) für ein Netzwerk-Management-System (NMS) zur Verarbeitung von Ereignisinformationen, wobei das Management-Objekt (MO1, MO2) Empfangsmittel (TRM) zum Empfangen Ereignismeldungen aufweist, die Ereignisse von mindestens einem durch das Management-Objekt (MO1, MO2) verwalteten Objekt (VO1, VO2, VO3) betreffen,
**dadurch gekennzeichnet,**
- **dass** die Empfangsmittel (TRM) zum Empfangen eines von einem Diskriminator-Objekt (DO1, DO2) gesendeten Berichtes über mindestens einen Ereigniszustand des mindestens einen verwalteten Objektes (VO1, VO2, VO3) ausgestaltet sind, und
- **dass** es Speichermittel (MEMO) zum Speichern des mindestens einen Ereigniszustandes des mindestens einen verwalteten Objektes (VO1, VO2, VO3) aufweist.

14. Management-Objekt (MO1, MO2) nach Anspruch 13, **dadurch gekennzeichnet, dass** es Erfassungsmittel zum Ermitteln zumindest einer Bedingung aufweist, aufgrund derer das Management-Objekt (MO1, MO2) einen Ereigniszustand des mindestens einen verwalteten Objektes (VO1, VO2, VO3) benötigt und dass es Sendemittel (TRM) zum Senden einer (ersten) Anforderungsnachricht (AN1, AN2, AN3, AN4) zur Abfrage mindestens eines Ereigniszustandes des mindestens einen verwalteten Objektes (VO1, VO2, VO3) an das Diskriminator-Objekt (DO1, DO2) aufweist.

15. Management-Objekt (MO1, MO2) nach Anspruch 13 oder 14, **dadurch gekennzeichnet, dass** es Programmcode enthält, der von einem Steuermittel eines Servers ausgeführt werden kann.

16. Durch ein Management-Objekt (MO1, MO2) verwaltetes Objekt (VO1, VO2, VO3) zur Verarbeitung von Ereignisinformationen in einem Netzwerk-Management-System (NMS), das Sendemittel (TRV) zum Versenden von Ereignisinformationen aufweist, **dadurch gekennzeichnet, dass** es Speichermittel (MEMV, MIRV) zum Führen mindestens eines Ereigniszustandes aufweist, dass es Empfangsmittel (TRV) zum Empfangen einer von einem Diskriminator-Objekt (DO1, DO2) gesendeten (zweiten) Anforderungsnachricht zur Abfrage des mindestens einen Ereigniszustandes aufweist und dass die Sendemittel (TRV) zum Senden des mindestens einen Ereigniszustandes an das Diskriminator-Objekt (DO1, DO2) ausgestaltet sind.

17. Verwaltetes Objekt (VO1, VO2, VO3) nach Anspruch 16, **dadurch gekennzeichnet, dass** es Programmcode enthält, der von einem Steuermittel eines Servers ausgeführt werden kann.

18. Speichermittel, insbesondere Diskette oder CD-ROM, Digital Versatile Disc, Festplattenlaufwerk oder dergleichen, mit einem darauf gespeicherten Diskriminator-Objekt (DO1, DO2) nach Anspruch 12 und/oder mit einem darauf gespeicherten Management-Objekt (MO1, MO2) nach Anspruch 15 und/oder mit einem darauf gespeicherten verwalteten Objekt (VO1, VO2, VO3) nach Anspruch 17.
